# EUROPÄISCHE PATENTANMELDUNG

(11) **EP 3 667 842 A1**
(43) Veröffentlichungstag der Anmeldung: **17.06.2020**
(21) Anmeldenummer: 19216259.2
(22) Anmeldetag: 13.12.2019
(51) Int. Cl.: H01T 4/04, H01R 31/06, H02B 1/46, H02B 1/52, H02B 1/28

(54) **ÜBERSPANNUNGSSCHUTZ**

(30) Priorität: 14.12.2018 DE 202018107182 U
(71) Anmelder: INDU-Electric Gerber GmbH, 41470 Neuss (DE)
(72) Erfinder: GOCKEL, Dominik, 41470 Neuss (DE)
(74) Vertreter: Lenzing Gerber Stute

(57) **Zusammenfassung**

Die Erfindung betrifft eine mobile Box mit einem elektrischen Eingang (2) und mindestens einem damit elektrisch verbundenen elektrischen Ausgang (3) für ein Stromverteilungssystem, insbesondere für ein mobiles Stromverteilungsnetz, sowie ein damit ausgestattetes mobiles Stromverteilungsnetz. Um einzelne Stromverteilerboxen oder auch Verbraucher in einem solchen mobilen Stromverteilungsnetz gegen Störungen innerhalb des mobilen Stromverteilungsnetzes auf einfache Weise abzusichern, wird vorgeschlagen, den elektrischen Eingang der Box mit einem drei-, vier- oder fünfpoligen Überspannungsableiter (4) des Typs 1 und/oder 2 gemäß DIN EN 61643-11/VDE0675-6-11 elektrisch mit dem elektrischen Ausgang (3) direkt verbunden ist.

## Beschreibung

Die vorliegende Erfindung betrifft eine mobile Box für ein Stromverteilungssystem, insbesondere für ein mobiles Stromverteilungsnetz, mit einem elektrischen Eingang und genau einem damit elektrisch verbundenen elektrischen Ausgang.

Überspannungsableiter des Typs 1 oder 2 gemäß DIN EN 61643-11 / VDE0675-6-11 sind hinlänglich aus der elektrischen Absicherung von Gebäuden bekannt. Ein Überspannungsableiter des Typs 1 soll insbesondere in der Gebäudeeinspeisung als Grobschutz den Energieinhalt eines Blitzes ableiten und die verbleibende Restspannung auf Werte kleiner als 1300 bis 6000 V (je nach verwendeter Technologie) begrenzen. Es wird mit Strömen von 50/100 kA mit einer Impulsform 10/350 µs gerechnet, was den typischen Werten eines direkten Blitzeinschlages entspricht. Ein Überspannungsableiter des Typs 2 befindet sich bei Gebäuden üblicherweise in den sogenannten Etagenverteilern und begrenzt die verbleibenden Überspannungen auf weniger als 600 bis 2000 V und ist darauf angewiesen, dass die von ihm abzufangenden Überspannungen typischerweise 4000 V nicht überschreiten. Ein Überspannungsschutz gemäß Typ 1 oder 2 ist üblicherweise in der elektrischen Hausinstallation vorgesehen. Elektrische Baugruppen sind üblicherweise in Verteilerschränken fest montiert.

Im Weiteren gibt es einen Überspannungsschutz gemäß Typ 3 (Feinschutz) der die jeweiligen Steckdosen und die Steckverbindungen aller anderen Leitungen schützt. Er reduziert die verbleibenden Überspannungen auf das von den angeschlossenen Geräten, Baugruppen oder Bauteilen verkraftbare Maß.

In der Veranstaltungstechnik werden regelmäßig mobile Stromverteilungsnetze aufgebaut. Hierzu werden mobile Stromverteilerboxen verwendet, die an einen Stromanschluss angeschlossen werden und die eine Mehrzahl von Steckdosen aufweisen, an die Kabel zur Versorgung von elektrischen Geräten oder von Unterverteilungen angeschlossen werden können. Die überwiegende Anzahl der im Markt erhältlichen und im Markt verwendeten Stromverteilerboxen sind nicht mit einem Überspannungsschutz ausgestattet. Es kann aber die Notwendigkeit bestehen, bei der Verwendung von mobilen Verteilerboxen einen Überspannungsschutz des Typs 1 oder 2 vorzusehen.

Die der vorliegenden Erfindung zugrunde liegende Aufgabe besteht darin, eine Möglichkeit bereitzustellen, dies auf einfache Weise zu ermöglichen.

Diese Aufgabe wird erfindungsgemäß mit einer mobilen Box mit den Merkmalen des Anspruchs 1 gelöst, ebenso wie mit einem mobilen Stromverteilungsnetz mit den Merkmalen des Anspruchs 15. Aus den Unteransprüchen ergeben sich bevorzugte Ausführungsformen der Erfindung.

Unter einem Überspannungsableiter des Typs 1 und/oder 2 wird insbesondere ein solcher verstanden, der die Funktionalität eines Überspannungsableiters des Typs 1 und/oder 2 bietet. Er kann aber auch weitere Funktionen, beispielsweise die eines Überspannungsableiters des Typs 3 erfüllen. Eine Zusammenschaltung von Überspannungsableitern des Typs 1 und des Typs 2 und gegebenenfalls auch des Typs 3 wird ebenso hierunter verstanden.

Der Grundgedanke der Erfindung besteht darin, mit der mobilen Box ein Vorschaltgerät für mobile Stromverteilerboxen bereitzustellen und damit einen Überstromschutz des Typs 1 oder 2 zu realisieren. Der Vorteil besteht gerade beim Aufbau von mobilen Stromverteilungsnetzen, beispielsweise für Veranstaltungen, darin, dass jegliche Arten von Stromverteilerboxen verwendet werden kann, unabhängig davon, ob sie selbst eine entsprechende Überspannungsschutzfunktion beinhalten oder nicht. Damit entfällt insbesondere beim Zusammenstellen der Bestandteile einer mobilen Stromverteilung der Aufwand für die Prüfung, ob die zu verwendeten Stromverteilerboxen einen solchen Überspannungsschutz selbst gewährleisten oder nicht.

Der in der erfindungsgemäßen Box verwendete Überspannungsableiter kann vorzugsweise drei-, vier- oder fünfpolig sein, um entweder in einer einphasigen oder einer dreiphasigen Stromverteilung verwendet zu werden. Somit ist die Box in jeglicher Form von Niederspannungsnetzen verwendbar.

Aus dem gleichen Grund ist es von Vorteil, wenn der elektrische Eingang bzw. Ausgang mit standardisierten Anschlüssen ausgestattet ist. Bei einer einphasigen Stromverteilung sind das typischerweise Schuko-Stecker bzw. Schuko-Steckdosen oder dreipolige CEE-Stecker bzw. -dosen, bei dreiphasigem Strom typischerweise CEE-Stecker bzw. CEE-Steckdosen oder Powerlock-Stecker bzw. -dosen.

Die Anschlüsse der Box können in einer oder mehreren Gehäusewänden der Box vorgesehen sein, aber auch an Enden von Kabeln, die durch die Gehäusewand der Box hindurchgeführt und mit dem Überspannungsableiter verbunden sind.

Die mobile Box kann außerdem einen zweiten oder weitere elektrische Eingänge und einem zweiten oder weiteren elektrischen Ausgängen aufweisen, wobei zwischen jedem elektrische Eingang elektrisch und den damit verbundenen elektrischen Ausgängen jeweils ein Überspannungsableiter des Typs 1 und/oder 2 zwischengeschaltet ist. Insbesondere wenn die erfindungsgemäße Box genau einen dreipoligen (für einphasigen Strom) und genau einen vier- bzw. fünfpoligen (für Drehstrom) Überspannungsableiter des Typs 1 oder 2 enthält, ist sie beim Aufbau von mobilen Niederspannungsverteilungen als Vorschaltgerät universell verwendbar.

In einer einfachen Version weist die erfindungsgemäße mobile Box genau einen elektrischen Eingang und genau einen elektrischen Ausgang auf.

Die Funktionalität der Überspannungsabsicherung kann noch dadurch ergänzt werden, dass der oder die Überspannungsableiter auch die Funktion eines Überspannungsschutzes gemäß Typ 3 bietet/bieten. In diesem Fall würde der Überspannungsableiter neben seiner Funktionalität als Typ 1 und/oder Typ 2 Überspannungsableiter als Kombinationsgerät auch als Typ 3 Überspannungsableiter dienen.

Außerdem ist die erfindungsgemäße Box vorzugsweise spritzwassergeschützt und/oder stoßfest mit mindestens IK07, vorzugsweise mit IK10 gemäß IEC 62262, und zwar unabhängig davon, ob sie für den Einsatz innerhalb oder außerhalb von Gebäuden gedacht ist.

In einer weiteren bevorzugten Ausführungsform der Erfindung ist der Überspannungsableiter derart in eine Gehäusewand der Box eingelassen, dass seine Anzeigemittel von außen sichtbar sind. Alternativ hierzu können in mindestens einer Gehäusewand der Box Anzeigemittel zum Anzeigen des Betriebszustands des Überspannungsableiters vorgesehen sein, die ein Signal vom Überspannungsableiter erhalten und den Betriebszustand des Überspannungsableiters anzeigen, wobei der Überspannungsableiter dann vorzugsweise, aber nicht notwendigerweise, vollständig im Inneren der Box angeordnet ist, so dass er von äußeren Einwirkungen vollständig geschützt ist. Eine äußere Anzeige ist aber nicht zwingend notwendig.

Zur besseren Handhabbarkeit kann die erfindungsgemäße Box auch mit einem oder mehreren Griffen und/oder mit einer oder mehreren Griffmulden versehen sein.

Mit dieser mobilen Box kann auf einfache Weise ein mobiles Stromverteilungsnetz mit mehreren mobilen Stromverteilerboxen aufgebaut werden, bei dem verschiedene Stromverteilerboxen kaskadiert hintereinander angeschlossen werden können, wobei einzelne Stränge durch eine entsprechend eingesetzte mobile Box abgesichert werden kann, so dass beispielsweise ein elektrischer Fehler in einem Strang nicht zu einem Ausfall des gesamten mobilen Stromversorgungsnetzes führt und etwaige, durch elektrische Störungen verursachte Schäden auf einen kleinen Bereich des mobilen Stromversorgungsnetzes beschränkt werden können.

Im Folgenden wird die Erfindung anhand einer Figur, in denen ein bevorzugtes Ausführungsbeispiele der Erfindung dargestellt ist, näher erläutert.

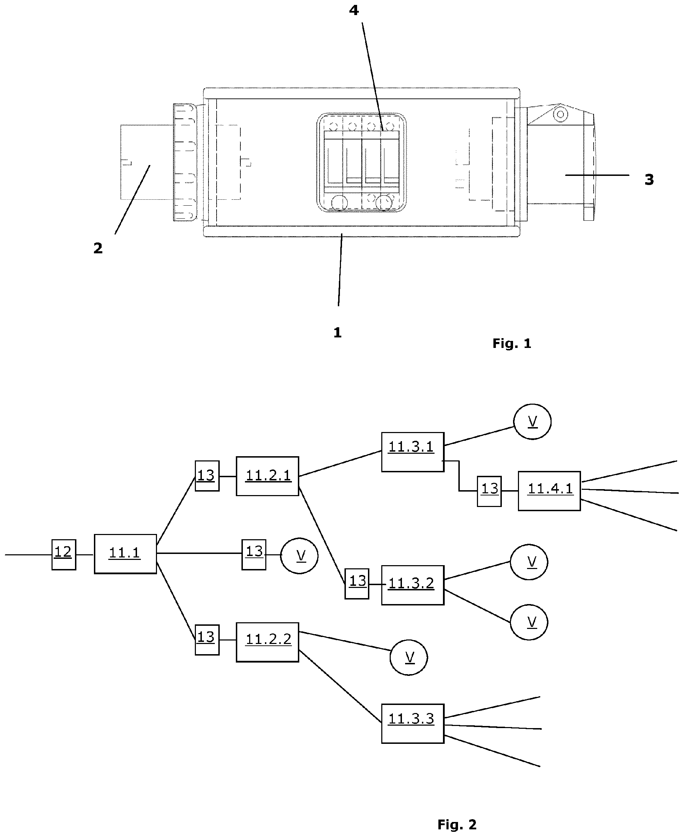

Figur 1 zeigt eine erfindungsgemäße mobile Box mit einem Gehäuse 1, einem an einer Stirnseite des Gehäuses 1 vorgesehenen elektrischen Eingang in Form eines CEE-Steckers und einer an der gegenüberliegenden Stirnseite des Gehäuses 1 vorgesehenen CEE-Steckdose 3 als elektrischer Ausgang. Die CEE-Steckdose ist durch eine Klappe spritzwassergeschützt.

In eine Seitenwand des Gehäuses ist von innen ein vierpolige Überspannungsableiter 4 eingelassen, dessen Anzeigeelemente, mit denen angezeigt wird, ob der Ableiter ausgelöst hat und ausgetauscht werden muss, in einer Aussparung der Gehäusewand sitzt und von außen sichtbar ist. Der Überspannungsableiter 4 ist durch hier nicht dargestellte, im Inneren des Gehäuses 1 geführte Kabel sowohl mit dem elektrischen Eingang 2 als auch mit dem elektrischen Ausgang 3 elektrisch verbunden.

Figur 2 zeigt ein Beispiel eines kaskadierten mobilen Stromverteilungsnetz mit mehreren, kaskadiert und in verschiedenen Ebenen hintereinander elektrisch verbundenen mobilen Stromverteilerboxen 11.1, 11.2.1, 11.2.2, 11.3.1, 11.3.2, 11.3.3, 11.4.1 und daran angeschlossenen Verbrauchern V. Das ganze mobile Stromverteilungsnetz ist gegen Fehler, beispielsweise aus dem Stromnetz eines Energieversorgers, über eine erste mobile Box, die der mit einer Stromversorgung verbundenen ersten Stromverteilerbox 11.1 vorgeschaltet ist, abgesichert. Einzelne Bereiche des nachfolgenden mobilen Stromverteilungsnetzes sind durch mobile Boxen 13 abgesichert, die nachgeordneten Stromverteilerboxen 11.2.1, 11.2.2, 11.2.3, 11.3.1, 11.3.2 oder auch einzelnen Verbrauchern V vorgeschaltet oder ggf. auch nachgeschaltet sind.

## Patentansprüche

1. Mobile Box für ein Stromverteilungssystem, insbesondere für ein mobiles Stromverteilungsnetz, mit einem elektrischen Eingang (2) und mindestens einem damit elektrisch verbundenen elektrischen Ausgang (3), **dadurch gekennzeichnet, dass** der elektrische Eingang (2) mit einem drei-, vier- oder fünfpoligen Überspannungsableiter (4) des Typs 1 und/oder 2 gemäß DIN EN 61643-11/VDE0675-6-11 elektrisch über ein erstes Leitungsteil verbunden ist und der Überspannungsableiter über mindestens ein zweites Leitungsteil mit mindestens einem der elektrischen Ausgänge (3) direkt verbunden ist.

2. Box nach Anspruch 1, **dadurch gekennzeichnet, dass** der Überspannungsableiter (4) dreipolig ist.

3. Box nach Anspruch 2, **dadurch gekennzeichnet, dass** der elektrische Eingang (2) einen Schuko-Stecker oder CEE-Stecker und der elektrische Ausgang (3) eine Schuko-Steckdose oder eine CEE-Steckdose aufweist.

4. Box nach Anspruch 1, **dadurch gekennzeichnet, dass** der Überspannungsableiter (4) vier- oder fünfpolig ist, wobei vorzugsweise der elektrische Eingang (2) und der elektrische Ausgang (3) jeweils einen CEE-Stecker oder eine CEE-Steckdose bzw. einen Powerlock-Stecker bzw. eine Powerlock-Steckdose aufweisen.

5. Box nach einem der vorstehenden Ansprüche, **dadurch gekennzeichnet, dass** der elektrische Eingang (2) und/oder der elektrische Ausgang (3) in einer Gehäusewand der Box vorgesehen ist.

6. Box nach einem der vorstehenden Ansprüche, **dadurch gekennzeichnet, dass** der elektrische Eingang (2) und/oder der elektrische Ausgang (3) über ein durch die Gehäusewand der Box hindurch geführtes Kabel mit dem Überspannungsableiter (4) verbunden sind.

7. Box nach einem der vorstehenden Ansprüche, **gekennzeichnet durch** einen zweiten oder weitere elektrische Eingänge und einem zweiten oder weiteren elektrischen Ausgängen, wobei zwischen jedem elektrische Eingang und den damit verbundenen elektrischen Ausgängen jeweils ein Überspannungsableiter des Typs 1 und/oder 2 zwischengeschaltet ist.

8. Box nach Anspruch 7, **dadurch gekennzeichnet, dass** die Box mindestens einen dreipoligen und mindestens einen vierpoligen Überspannungsableiter des Typs 1 und/oder 2, vorzugsweise genau einen dreipoligen und genau einen vierpoligen Überspannungsableiter des Typs 1 und/oder 2, enthält.

9. Box nach einem der vorstehenden Ansprüche, **dadurch gekennzeichnet, dass** der oder die Überspannungsableiter (4) auch die Funktion eines Überspannungsschutzes gemäß Typ 3 haben.

10. Box nach einem der vorstehenden Ansprüche, **dadurch gekennzeichnet, dass** sie spritzwassergeschützt und/oder stoßfest mit mindestens IK07, vorzugsweise mit IK10 gemäß IEC 62262, ist.

11. Box nach einem der vorstehenden Ansprüche, **dadurch gekennzeichnet, dass** der Überspannungsableiter (4) derart in eine Gehäusewand der Box eingelassen ist, dass seine Anzeigemittel von außen sichtbar sind.

12. Box nach einem der vorstehenden Ansprüche, **dadurch gekennzeichnet, dass** der eine elektrische Eingang (2) mit genau einem elektrischen Ausgang (3) elektrisch verbunden ist, und die Box weist vorzugsweise genau einen elektrischen Eingang (2) und genau einen elektrischen Ausgang (3) auf.

13. Box nach einem der vorstehenden Ansprüche, **dadurch gekennzeichnet, dass** in mindestens einer Gehäusewand der Box Anzeigemittel zum Anzeigen des Betriebszustands des Überspannungsableiters (4) vorgesehen sind, die den Betriebszustand des Überspannungsableiters (4) anzeigen, wobei der Überspannungsableiter vorzugsweise vollständig innerhalb der Box angeordnet ist.

14. Box nach einem der vorstehenden Ansprüche, **gekennzeichnet durch** mindestens einen Griff am oder eine Griffmulde in ihrem Gehäuse (1).

15. Mobiles Stromverteilungsnetz mit mehreren mobilen Stromverteilerboxen, die mindestens einen Stromeingang und mehr als einen Stromausgang haben, wobei der Stromeingang mindestens einer ersten Stromverteilerbox an einen Stromanschluss angeschlossen ist und der Stromeingang mindestens einer zweiten Stromverteilerbox mittelbar oder unmittelbar mit dem Stromausgang der ersten Stromverteilerbox verbunden ist, **dadurch gekennzeichnet, dass** mindestens eine mobile Box nach einem der vorhergehenden Ansprüche zwischen die erste Stromverteilerbox und den Stromanschluss bzw. zwischen die zweite Stromverteilerbox und die erste Stromverteilerbox geschaltet ist.
